# EUROPÄISCHE PATENTANMELDUNG

(11) **EP 4 345 280 A1**
(43) Veröffentlichungstag der Anmeldung: **03.04.2024**
(21) Anmeldenummer: 23199269.4
(22) Anmeldetag: 25.09.2023
(51) Int. Cl.: F02M 45/08, F02M 43/04, F02D 19/06, F02M 61/18

(54) **EINSPRITZDÜSE FÜR EINEN DUAL-FUEL-MOTOR, DUAL-FUEL-MOTOR UND VERFAHREN ZUM BETREIBEN DESSELBEN**

(30) Priorität: 28.09.2022 DE 102022124897
(71) Anmelder: MAN Energy Solutions SE, 86153 Augsburg (DE)
(72) Erfinder: WEBER, Armin, 87754 Kammlach (DE); INDRICH, Maximilian, 86399 Bobingen (DE)

(57) **Zusammenfassung**

Einspritzdüse (23) für einen Zylinder (2) eines Dual-Fuel-Motors (1), wobei über die Einspritzdüse (23) in einer ersten Betriebsart des Dual-Fuel-Motors (1) ein erster Kraftstoff und in einer zweiten Betriebsart des Dual-Fuel-Motors (1) Zündfluid für einen zweiten Kraftstoff in einen Brennraum (9) des Zylinders (2) einbringbar ist, wobei die Einspritzdüse (23) einen Einspritzdüsenkörper (24) mit ersten Spritzlöchern (25) und zweiten Spritzlöchern (26) sowie eine im Einspritzdüsenkörper (24) verlagerbar geführte Einspritzdüsennadel (27) aufweist, wobei die ersten Spritzlöcher (25) einen kleineren Spritzlochquerschnitt aufweisen als die zweiten Spritzlöcher (26), wobei die ersten und zweiten Spritzlöcher (25, 26) in Axialrichtung und damit in Verlagerungsrichtung der Einspritzdüsennadel (27) gesehen einen definierten Abstand aufweisen, und wobei in einer dem Schließen oder Versperren der Spritzlöcher (25, 26) dienenden Verlagerungsrichtung (X1) der Einspritzdüsennadel (27) gesehen die ersten Spritzlöchern (25) vor den zweiten Spritzlöchern (26) und in einer dem Öffnen oder Freigeben der Spritzlöcher (25, 26) dienenden Verlagerungsrichtung (X2) der Einspritzdüsennadel (27) gesehen die ersten Spritzlöcher (25) hinter den zweiten Spritzlöchern (26) liegen. Fig. 2

## Beschreibung

Die Erfindung betrifft eine Einspritzdüse für einen Dual-Fuel-Motor nach dem Oberbegriff des Anspruchs 1. Des Weiteren betrifft die Erfindung einen Dual-Fuel-Motor und ein Verfahren zum Betreiben desselben.

Aus der Praxis sind Dual-Fuel-Motoren bekannt, in denen einerseits in einer ersten Betriebsart des Dual-Fuel-Motors ein erster Kraftstoff, insbesondere ein flüssiger, zündwilliger Kraftstoff wie Diesel, und andererseits in einer zweiten Betriebsart des Dual-Fuel-Motors ein zweiter Kraftstoff, insbesondere ein gasförmiger, zündunwilliger Kraftstoff wie Erdgas, verbrannt werden kann. In der zweiten Betriebsart des Dual-Fuel-Motors wird in der Regel ein mageres Gas-Luft-Gemisch in die Zylinder des Dual-Fuel-Motors eingebracht und durch die Zündenergie eines ebenfalls in die Zylinder eingebrachten Zündfluids gezündet.

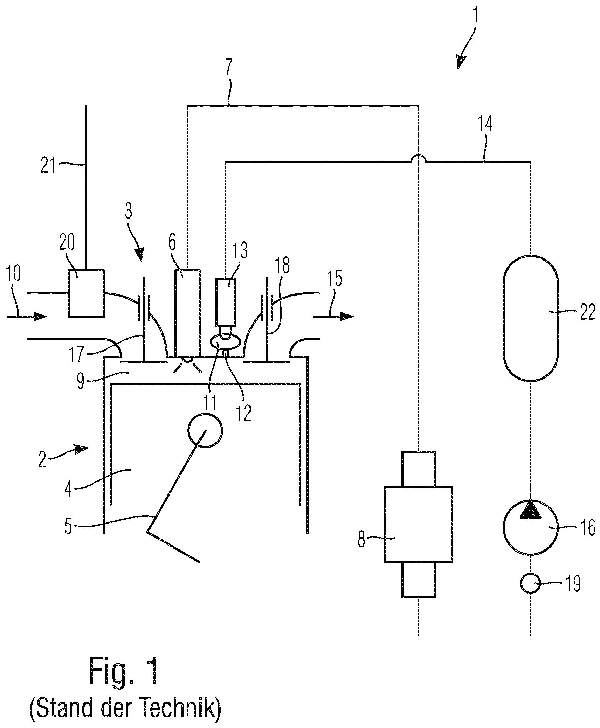

In Fig. 1 sind Baugruppen eines aus dem Stand der Technik bekannten Dual-Fuel-Motors 1 gezeigt, wobei Fig. 1 einen Zylinder 2 eines solchen Dual-Fuel-Motors 1 zeigt. Der Zylinder 2 verfügt über einen Zylinderkopf 3. Im Zylinder 2 bewegt sich ein Kolben 4, der von einem Pleuel 5 geführt ist, auf und ab. Im Zylinderkopf 3 ist eine Einspritzdüse 6 befestigt, durch die in der ersten Betriebsart des Dual-Fuel-Motors der erste Kraftstoff, insbesondere flüssiger Dieselkraftstoff, über eine Kraftstoffleitung 7 von einer Kraftstoffpumpe 8 aus in einen Brennraum 9 des Zylinders 2 eingespritzt werden kann. Die Einspritzdüse 6, die Kraftstoffleitung 7 sowie die Kraftstoffpumpe 8 sind Elemente einer Kraftstoffzuführeinrichtung, die der Zuführung des ersten Kraftstoffs in den Brennraum 9 des Zylinders 2 dient. Diese Kraftstoffzuführeinrichtung ist dann aktiv, wenn im Zylinder 2 des Dual-Fuel-Motors in der ersten Betriebsart des Dual-Fuel-Motors als erster Kraftstoff ein flüssiger Kraftstoff, insbesondere Diesel, verbrannt wird.

Zur Verbrennung des flüssigen Kraftstoffs ist in den jeweiligen Zylinder 2 des Dual-Fuel-Motors 1 weiter Ladeluft 10 über ein Einlassventil 17 einbringbar, wobei bei der Verbrennung des Kraftstoffs entstehendes Abgas 15 über ein Auslassventil 18 vom jeweiligen Zylinder 2 des Dual-Fuel-Motors 1 abgeführt werden kann.

Im Brennraum 9 des Zylinders 2 des Dual-Fuel-Motors 1 kann in einer zweiten Betriebsart des Dual-Fuel-Motors ein zweiter Kraftstoff, insbesondere Gas, verbrannt werden. Hierzu umfasst der Dual-Fuel-Motor 1 eine Mischbildungseinheit 20, in der ein Gemisch aus Verbrennungsluft 10 und Gas, welches der Gemischbildungseinheit 20 über eine Gasversorgungsleitung 21 bereitgestellt wird, gebildet wird, wobei dieses Gas-Luft-Gemisch in den Brennraum 9 des Zylinders 2 über das Einlassventil 17 eingebracht wird. Auch bei der Verbrennung des Gases entsteht Abgas 15, welches über das Auslassventil 18 vom Zylinder 2 abgeführt werden kann. Zur Zündung des zweiten Kraftstoffs, insbesondere des Gas-Luft-Gemischs, in der zweiten Betriebsart des Dual-Fuel-Motors 1 dient Zündfluid, welches in einen weiteren Brennraum 11 des Zylinders 2 mit Hilfe eines Zündfluid-Injektors 13 eingebracht werden kann, wobei dieser weitere Brennraum 11 des Zylinders 2 mit dem Brennraum 9 über mindestens einen Verbindungskanal 12 gekoppelt ist. Das Zündfluid kann alternativ auch direkt in den Brennraum 9 eingebracht werden. Der Zündfluid-Injektor 13 des in Fig. 1 gezeigten Zylinders 2 ist Bestandteil eines Zündfluid-Einspritzsystems des Dual-Fuel-Motors 1, wobei das Zündfluid-Einspritzsystem für jeden Zylinder 2 des Dual-Fuel-Motors 1 einen individuellen Zündfluid-Injektor 13 umfasst. Die Zündfluid-Injektoren 13 sind über eine Zündfluid-Leitung 14 ausgehend von einem gemeinsamen Zündfluid-Speicher 22 des Zündfluid-Einspritzsystems mit Zündfluid versorgbar, wobei dem Zündfluid-Speicher 22 eine Zündfluid-Förderpumpe 16 zugeordnet ist, die den Zündfluid-Speicher 22 mit Zündfluid versorgt. Bei der Zündfluid-Förderpumpe 16 kann es sich um eine elektrisch betriebene Hochdruckpumpe handeln. Der Zündfluid-Förderpumpe 16 ist eine Saugdrossel 19 zugeordnet.

Ein aus der Praxis bekannter Dual-Fuel-Motor 1 weist demnach einerseits die Kraftstoffzuführeinrichtung zur Zuführung des ersten Kraftstoffs in der ersten Betriebsart des Dual-Fuel-Motors 1 auf, andererseits verfügt ein aus der Praxis bekannter Dual-Fuel-Motor 1 über ein separates Zündfluid-Einspritzsystem, um in der zweiten Betriebsart des Dual-Fuel-Motors 1 zur Verbrennung des zweiten Kraftstoffs das Zündfluid in die Zylinder 2 des Dual-Fuel-Motors 1 einzubringen.

Ein aus der Praxis bekannter Dual-Fuel-Motor verfügt demnach über zwei Einspritzsysteme, nämlich die Kraftstoffzuführeinrichtung für den ersten Kraftstoff sowie das Zündfluid-Einspritzsystem für das Zündfluid. Beim Zündfluid handelt es sich typischerweise um den ersten Kraftstoff der ersten Betriebsart, der in der zweiten Betriebsart des Dual-Fuel-Motors in einer relativ geringen Menge in den jeweiligen Zylinder über den jeweiligen Zündfluid-Injektor des Zündfluid-Einspritzsystems einbringbar ist. Bei aus der Praxis bekannten Dual-Fuel-Motoren sind die Einspritzdüsen der Kraftstoffzuführeinrichtung für den ersten Kraftstoff zur Förderung solch geringer Mengen des ersten Kraftstoffs in der zweiten Betriebsart des Dual-Fuel-Motors nicht geeignet. Dies erfordert dann zwei Einspritzsysteme und bedingt einen komplexen Aufbau von Dual-Fuel-Motoren.

Aus DE 10 2017 122 117 A1 ist eine Einspritzdüse für einen Zylinder eines Dual-Fuel-Motors bekannt, mit welcher einerseits in der ersten Betriebsart der erste Kraftstoff und andererseits in der zweiten Betriebsart das Zündfluid in die Brennkammer des jeweiligen Zylinders des Dual-Fuel-Motors eingebracht werden kann. Es sind dann nicht mehr zwei Einspritzsysteme erforderlich. In einen Einspritzdüsenkörper der Einspritzdüse sind erste Spritzlöcher und zweite Spritzlöcher eingebracht, wobei die ersten Spritzlöcher einen kleineren Spritzlochquerschnitt aufweisen als die zweiten Spritzlöcher. Mit dem Einspritzdüsenkörper wirkt eine Einspritzdüsennadel zusammen, wobei in Axialrichtung und damit in Verlagerungsrichtung der Einspritzdüsennadel gesehen die ersten Spritzlöcher und die zweiten Spritzlöchern einen definierten Abstand voneinander aufweisen.

Nach DE 10 2017 122 117 A1 sind in einer dem Schließen oder Versperren der Spritzlöcher dienenden Verlagerungsrichtung der Einspritzdüsennadel gesehen die zweiten Spritzlöcher vor den ersten Spritzlöchern angeordnet. In einem dem Öffnen oder Freigeben der Spritzlöcher dienenden, entgegengesetzten Verlagerungsrichtung der Einspritznadel gesehen sind die zweiten Spritzlöcher hinter den ersten Spritzlöchern positioniert. In die Einspritzdüsennadel ist dabei ein Führungskanal eingebracht, durch den der erste Kraftstoff bzw. das Zündfluid sowohl in der ersten Betriebsart als auch in der zweiten Betriebsart des Dual-Fuel-Motors strömt.

Obwohl es die Einspritzdüse der DE 10 2017 122 117 A1 bereits ermöglicht, ein Einspritzsystem an einem Dual-Fuel-Motor, nämlich ein separates Einspritzsystem für das Zündfluid, einzusparen, besteht Bedarf an einer alternativen Einspritzdüse für einen Dual-Fuel-Motor, die es ebenfalls ermöglicht, auf ein separates Einspritzsystem für das Zündfluid zu verzichten, die jedoch einfacher herstellbar ist.

Hiervon ausgehend liegt der vorliegenden Erfindung die Aufgabe zugrunde, eine neuartige Einspritzdüse für einen Dual-Fuel-Motor, einen Dual-Fuel-Motor mit einer solchen Einspritzdüse und ein Verfahren zum Betreiben des Dual-Fuel-Motors zu schaffen.

Diese Aufgabe wird durch eine Einspritzdüse nach Anspruch 1, durch einen Dual-Fuel-Motor nach Anspruch 10 und durch ein Verfahren nach Anspruch 11 gelöst.

Erfindungsgemäß liegen in einer dem Schließen oder Versperren der Spritzlöcher dienenden Verlagerungsrichtung der Einspritzdüsennadel gesehen die ersten Spritzlöcher vor den zweiten Spritzlöchern und in einer dem Öffnen oder Freigeben der Spritzlöcher dienenden Verlagerungsrichtung der Einspritzdüsennadel gesehen die ersten Spritzlöcher hinter den zweiten Spritzlöchern.

Dadurch, dass bei der erfindungsgemäßen Einspritzdüse die Relativposition der ersten Spritzlöcher der Einspritzdüse und der zweiten Spritzlöcher der Einspritzdüse gegenüber dem Stand der Technik vertauscht ist, dass also in der dem Schließen oder Versperren der Spitzlöcher dienenden Verlagerungsrichtung der Einspritzdüsennadel gesehen die ersten Spritzlöcher mit dem kleineren Spitzlochquerschnitt vor den zweiten Spritzlöchern mit dem größeren Spitzlochquerschnitt liegen und in einer dem Öffnen oder Freigeben der Spritzlöcher dienenden Verlagerungsrichtung der Einspritzdüsennadel gesehen die ersten Spritzlöcher mit dem kleineren Spitzlochquerschnitt hinter den zweiten Spritzlöchern mit dem größeren Spitzlochquerschnitt liegen, ist eine einfachere Fertigung der Einspritzdüse möglich. Insbesondere kann auf einen Führungskanal für den ersten Kraftstoff bzw. das Zündfluid, der sich durch die Einspritzdüsennadel hindurch erstreckt, verzichtet werden.

Vorzugsweise weist die Einspritzdüsennadel der erfindungsgemäßen Einspritzdüse einen ersten, vorzugsweise kegelstumpfartigen Nadelabschnitt, der mit einem ersten Ventilsitz des Einspritzdüsenkörpers zusammenwirkt, und einen zweiten, vorzugsweise zylindrischen Nadelabschnitt, der mit einem zweiten Ventilsitz des Einspritzdüsenkörpers zusammenwirkt, auf, wobei dann, wenn die Einspritzdüsennadel sowohl die ersten Spritzlöcher als auch die zweiten Spritzlöcher öffnet oder freigibt, der erste Nadelabschnitt vom ersten Ventilsitz und der zweite Nadelabschnitt vom zweiten Ventilsitz abgehoben ist. Dies ist für eine einfache Fertigung der Einspritzdüse bevorzugt.

Vorzugsweise gibt die Einspritzdüsennadel der erfindungsgemäßen Einspritzdüse in der zweiten Betriebsart des Dual-Fuel-Motors, in welcher die Einspritzdüse dem Einbringen des Zündfluids in den Brennraum des Zylinders dient, die ersten und die zweiten Spritzlöchern zum Einbringen des Zündfluids in den Brennraum des Zylinders frei oder öffnet dieselben. Hierdurch ist es möglich, auch zum Zünden über die zweiten Spritzlöcher Zündfluid in den Brennraum des jeweiligen Zylinders einzubringen.

Vorzugsweise strömt in der ersten Betriebsart des Dual-Fuel-Motors, in welcher die Einspritzdüse dem Einbringen des ersten Kraftstoffs in den Brennraum des Zylinders dient, der erste Kraftstoff ausschließlich außen entlang die Einspritzdüsennadel durch einen Spalt zwischen der Einspritzdüsennadel und dem Einspritzdüsenkörper, wobei in der zweiten Betriebsart des Dual-Fuel-Motors, in welcher die Einspritzdüse dem Einbringen des Zündfluids in den Brennraum des Zylinders dient, das Zündfluid ebenfalls ausschließlich außen entlang der Einspritzdüsennadel durch einen Spalt zwischen der Einspritzdüsennadel und dem Einspritzdüsenkörper strömt. Sowohl in der ersten Betriebsart als auch in der zweiten Betriebsart des Dual-Fuel-Motors strömen der erste Kraftstoff bzw. das Zündfluid ausschließlich durch einen Spalt zwischen der Einspritzdüsennadel und dem Einspritzdüsenkörper. Auf den nach dem Stand der Technik erforderlichen, sich durch die Düsennadel erstreckenden Führungskanal für den ersten Kraftstoff bzw. das Zündfluid, kann verzichtet werden.

Bevorzugte Weiterbildungen der Erfindung ergeben sich aus den Unteransprüchen und der nachfolgenden Beschreibung.

Ausführungsbeispiele der Erfindung werden, ohne hierauf beschränkt zu sein, an Hand der Zeichnung näher erläutert. Dabei zeigt:
- Fig. 1:: ein Blockschaltbild eines Dual-Fuel-Motors nach dem Stand der Technik;
- Fig. 2:: ein Detail einer erfindungsgemäßen Einspritzdüse in einem ersten Zustand;
- Fig. 3:: das Detail der Fig. 2 in einem zweiten Zustand;
- Fig. 4:: das Detail der Fig. 2, 3 in einem dritten Zustand; und
- Fig. 5:: ein Diagramm zur Verdeutlichung der Funktionsweise der erfindungsgemäßen Einspritzdüse.

Die Erfindung betrifft eine Einspritzdüse für einen Dual-Fuel-Motor sowie einen Dual-Fuel-Motor. Der grundsätzliche Aufbau eines Dual-Fuel-Motors ist dem hier angesprochenen Fachmann geläufig und wurde bereits unter Bezugnahme auf Fig. 1 im Detail erläutert. So wird in einer ersten Betriebsart des Dual-Fuel-Motors ein erster Kraftstoff, insbesondere ein flüssiger, zündwilliger Kraftstoff wie zum Beispiel ein Dieselkraftstoff, in die Zylinder des Motors eingebracht und in den Zylindern verbrannt. In einer zweiten Betriebsart des Dual-Fuel-Motors wird ein zweiter Kraftstoff, insbesondere ein an sich zündunwilliges Gemisch aus einem gasförmigen Kraftstoff und Luft, in die Zylinder des Dual-Fuel-Motors eingebracht und über ein Zündfluid gezündet. Als Zündfluid in der zweiten Betriebsart dient insbesondere der flüssige Kraftstoff der ersten Betriebsart, der jedoch in der zweiten Betriebsart in einer geringeren Menge in den Brennraum der Zylinder eingebracht wird als in der ersten Betriebsart. Anstelle des ersten Kraftstoffs der ersten Betriebsart kann als Zündfluid zur Zündung des zweiten Kraftstoffs der zweiten Betriebsart auch ein anderes Zündfluid genutzt werden. Als Zündfluid kann z.B. ein Marinedieselöl wie ein DMB, DMX oder VLSFO Kraftstoff, ein HVO (hydrierte Pflanzenöle) Kraftstoff oder ein HFO (Schweröl) Kraftstoff genutzt werden. Diese Auflistung ist jedoch nur rein exemplarischer Natur. Es können auch andere Zündfluide genutzt werden.

Um dies zu ermöglichen, verfügen aus der Praxis bekannte Dual-Fuel-Motoren über zwei getrennte Einspritzsysteme, nämlich ein Kraftstoffeinspritzsystem, über welches in der ersten Betriebsart der erste Kraftstoff in einer relativ großen Menge in die Zylinder des Dual-Fuel-Motors eingebracht wird, sowie über ein Zündfluid-Einspritzsystem, über welches in der zweiten Betriebsart das Zündfluid in einer relativ geringen Menge in die Zylinder eingebracht wird. Die hier vorliegende Erfindung betrifft eine Einspritzdüse 23 für einen Zylinder 2 eines Dual-Fuel-Motors 1, über den in der ersten Betriebsart der flüssige Kraftstoff und in der zweiten Betriebsart das Zündfluid in den Brennraum 9 des jeweiligen Zylinders 2 einbringbar ist, sodass demnach keine zwei separaten Einspritzsysteme erforderlich sind.

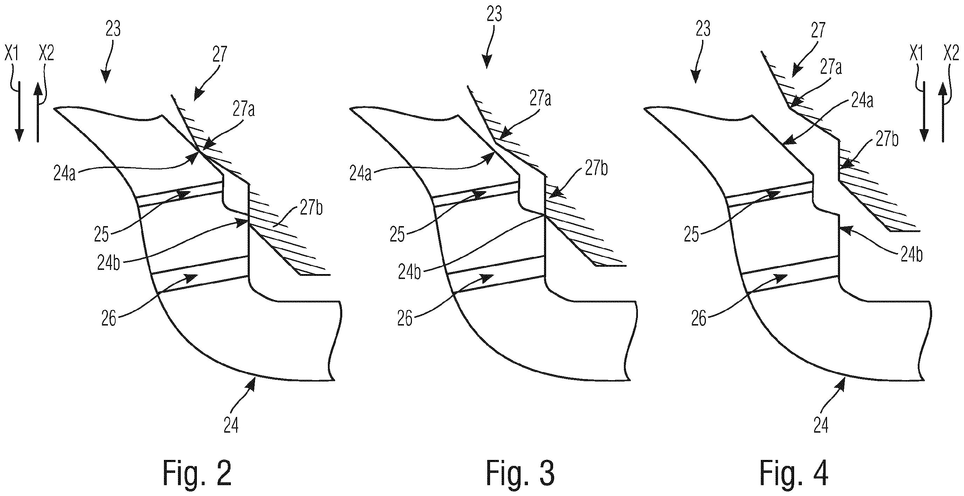

Fig. 2, 3 und 4 zeigen jeweils einen Ausschnitt aus einer erfindungsgemäßen Einspritzdüse 23 in unterschiedlichen Zuständen derselben, wobei von der Einspritzdüse 23 ein Einspritzdüsenkörper 24 und eine Einspritzdüsennadel 27 ausschnittsweise gezeigt sind. Die Einspritzdüsennadel 27 ist in dem Einspritzdüsenkörper 24 translatorisch verlagerbar, und zwar zum Schließen der Einspritzdüse 23 in der Verlagerungsrichtung X1 und zum Öffnen der Einspritzdüse 23 in der entgegengesetzten Verlagerungsrichtung X2.

Der Einspritzdüsenkörper 24 der Einspritzdüse 23 verfügt über erste Spritzlöcher 25 sowie über zweite Spritzlöcher 26, wobei in Fig. 2, 3 und 4 lediglich jeweils ein erstes Spritzloch 25 und ein zweites Spritzloch 26 gezeigt ist. In Umfangsrichtung des Einspritzdüsenkörpers 24 sind mehrere derartige Spritzlöcher 25, 26 angeordnet.

Die ersten Spritzlöcher 25 verfügen über einen kleineren Spritzlochquerschnitt als die zweiten Einspritzlöcher 26, wobei die ersten Einspritzlöcher 25 und die zweiten Einspritzlöcher 26 in Verlagerungsrichtung der Einspritzdüsennadel 27 gesehen einen definierten Abstand voneinander aufweisen, also in der jeweiligen Verlagerungsrichtung X1 bzw. X2 zueinander versetzt sind.

Im Sinne der hier vorliegenden Erfindung sind in einer dem Schließen oder Versperren der Spritzlöcher 25, 26 und damit der Einspritzdüse 23 dienenden Verlagerungsrichtung X1 der Einspritzdüsennadel 27 gesehen die ersten Spritzlöcher 25, die im Vergleich zu den zweiten Spritzlöchern 26 einen kleineren Spritzlochquerschnitt aufweisen, vor den zweiten Spritzlöchern 26 angeordnet.

In der dem Öffnen oder Freigeben der Spritzlöcher 25, 26 und damit der Einspritzdüse 23 gesehen entgegengesetzten zweiten Verlagerungsrichtung X2 der Einspritzdüsennadel 27 sind die ersten Spritzlöcher 25, die gegenüber den zweiten Spritzlöchern 26 den kleineren Spritzlochquerschnitt aufweisen, hinter den zweiten Spritzlöchern 26 angeordnet.

Die Einspritzdüsennadel 27 weist einen ersten Nadelabschnitt 27a und einen zweiten Nadelabschnitt 27b auf. Der erste Nadelabschnitt 27a wirkt mit einem ersten Ventilsitz 24a des Einspritzdüsenkörper 24 zusammen. Der zweite Nadelabschnitt 27b wirkt mit einem zweiten Ventilsitz 24b des Einspritzdüsenkörpers 24 zusammen.

Dann, wenn die Einspritzdüse 23 inaktiv ist, also weder zum Einspritzen des ersten Kraftstoffs in der ersten Betriebsart des Dual-Fuel-Motors noch zum Einspritzen des Zündöls in der zweiten Betriebsart des Dual-Fuel-Motors genutzt wird, verschließt oder versperrt die Düsennadel 27 sowohl die ersten Spritzlöcher 25 als auch die zweiten Spritzlöcher 26. In diesem Fall liegt dann der erste Nadelabschnitt 27a am ersten Ventilsitz 24a und der zweite Nadelabschnitt 27b am zweiten Ventilsitz 24b an. Dies ist in Fig. 2 gezeigt.

Dann, wenn gemäß Fig. 4 die Einspritzdüsennadel 27 sowohl die ersten Spritzlöcher 25 als auch die zweiten Spritzlöcher 26 öffnet oder freigibt, ist der erste Nadelabschnitt 27a vom ersten Ventilsitz 24a und der zweite Nadelabschnitt 27b vom zweiten Ventilsitz 24b abgehoben. Dieser in Fig. 4 gezeigte Zustand wird zumindest dann genutzt, wenn der Dual-Fuel-Motor 1 in der ersten Betriebsart genutzt wird. Es kann dann über die ersten Spritzlöcher 25 und über die zweiten Spritzlöcher 26 jeweils erster Kraftstoff in die Brennkammer des jeweiligen Zylinders 2 eingebracht werden.

Bevor die Einspritzdüse 23 ausgehend von dem Zustand der Fig. 2 in den Zustand der Fig. 4 verlagert ist, nimmt die Einspritzdüse 23 den Zustand der Fig. 3 ein, wobei in Fig. 3 lediglich die ersten Spritzlöcher 25 geöffnet oder freigegeben sind, jedoch nicht die zweiten Spritzlöcher 26. Im Zustand der Fig. 3 ist der erste Nadelabschnitt 27a vom ersten Ventilsitz 24a abgehoben, der zweite Nadelabschnitt 27b liegt jedoch am zweiten Ventilsitz 24b an.

Während also in Fig. 4 über die ersten Spritzlöcher 25 und die zweiten Spritzlöcher 26 jeweils erster Kraftstoff oder Zündfluid in den Brennraum 9 des jeweiligen Zylinders 2 eingebracht werden kann, kann im Zustand der Fig. 3 lediglich über die ersten Spritzlöcher 25 Kraftstoff bzw. Zündfluid in den Brennraum 9 des jeweiligen Zylinders 2 eingebracht werden.

Sowohl im Zustand der Fig. 2 als auch im Zustand der Fig. 3 strömt der erste Kraftstoff bzw. das Zündfluid ausschließlich außen an der Einspritzdüsennadel 27 entlang, und zwar durch einen zwischen dem Einspritzdüsenkörper 24 und der Einspritzdüsennadel 27 ausgebildeten Spalt. Dieser Spalt ist in Fig. 3 relativ klein und kommuniziert lediglich mit den ersten Spritzlöchern 25. In Fig. 4 ist dieser Spalt relativ groß und kommuniziert sowohl mit den ersten Spritzlöchern 25 als auch mit den zweiten Spritzlöchern 26.

Der erste Nadelabschnitt 27a der Einspritzdüsennadel 27 ist kegelstumpfartig und der zweite Nadelabschnitt 27b derselben zylindrisch konturiert.

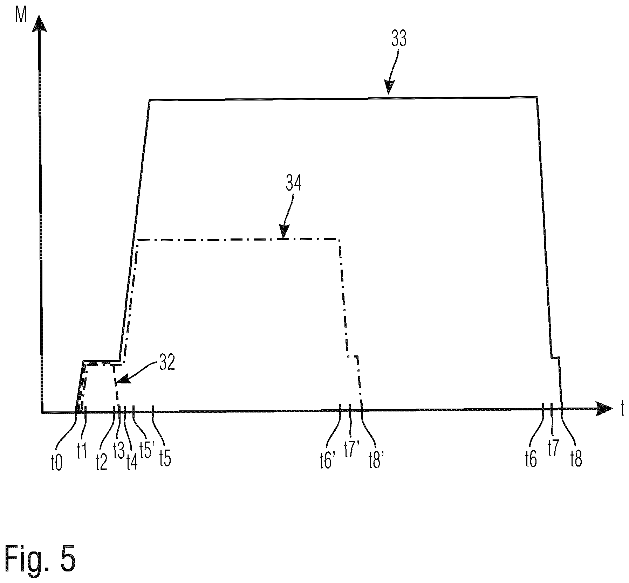

Fig. 5 verdeutlicht mit einem Diagramm die während eines Einspritzvorgangs bzw. eines Einspritztakts mithilfe der erfindungsgemäßen Einspritzdüse 23 in den Brennraum 9 des jeweiligen Zylinders 2 einbringbare Einspritzmenge M mit einem zeitlichen Einspritzverlauf.

Über der Zeit t sind in Fig. 5 drei unterschiedliche Kurvenverläufe 32, 33 und 34 für die Einspritzmenge M aufgetragen, und zwar mit dem Kurvenverlauf 32 eine Einspritzmenge für die zweite Betriebsart des Dual-Fuel-Motors, in welcher ausschließlich über die ersten Spritzlöcher 25 Zündöl in den Brennraum 9 des jeweiligen Zylinders 2 eingebracht wird, mit dem Kurvenverlauf 33 die Einspritzmenge für die erste Betriebsart des Dual-Fuel-Motors, in welcher erster Kraftstoff sowohl über die ersten Spritzlöcher 25 als auch über die zweiten Spritzlöcher 26 in den Brennraum 9 des jeweiligen Zylinders 2 eingebracht wird, und mit dem Kurvenverlauf 34 diejenige Einspritzmenge, die in der zweiten Betriebsart in den Brennraum 9 des jeweiligen Zylinders 2 eingebracht werden kann, nämlich dann, wenn in der zweiten Betriebsart das Zündfluid sowohl über die ersten Spritzlöcher 25 als auch über die zweiten Spritzlöcher 26 in den Brennraum 9 des jeweiligen Zylinders 2 eingebracht wird.

Zum Zeitpunkt t0 der Fig. 5 beginnt der jeweilige Einspritzvorgang bzw. Einspritztakt in den jeweiligen Zylinder 2 des Dual-Fuel-Motors 1 mit Hilfe der Einspritzdüse 23 desselben, wobei vor dem Zeitpunkt t0 die Einspritzdüse 23 den Zustand der Fig. 2 einnimmt. Zwischen dem Zeitpunkt t0 und t1 der Fig. 5 wird die Einspritzdüsennadel 27 der Einspritzdüse 23 ausgehend vom Zustand der Fig. 2 in Richtung auf den Zustand der Fig. 3 bewegt, um über die ersten Spritzlöcher 25 Zündfluid oder ersten Kraftstoff in den Brennraum 9 des jeweiligen Zylinders 2 einzubringen. Zwischen den Zeitpunkten t1 und t2 der Fig. 5 ist die über die ersten Einspritzdüsen 25 in den Brennraum 9 des jeweiligen Zylinders 2 einbringbare Einspritzmenge M konstant, wobei in Fig. 5 zwischen den Zeitpunkten t2 und t3 die Einspritzdüsennadel 27 der Einspritzdüse 23 ausgehend vom Zustand der Fig. 3 wieder in Richtung auf den Zustand der Fig. 2 überführt wird, sodass zum Zeitpunkt t3 das Einbringen von Zündfluid in den Brennraum 9 des jeweiligen Zylinders 2 beendet ist. Werden demnach in der zweiten Betriebsart des Dual-Fuel-Motors ausschließlich die ersten Spritzlöcher 25 zum Einbringen des Zündfluids in den Brennraum 9 des jeweiligen Zylinders 2 genutzt, so bildet sich der Kurvenverlauf 32 zwischen den Zeitpunkten t0 und t3 aus.

In der ersten Betriebsart des Dual-Fuel-Motors erfolgt das Einbringen der Einspritzmenge M in den Brennraum 9 des jeweiligen Zylinders 2 über den Kurvenverlauf 33, und zwar derart, dass die Einspritzdüse 23 ausgehend vom Zustand der Fig. 2 über den Zustand der Fig. 3 in den Zustand der Fig. 4 überführt wird, und zwar derart, dass zwischen den Zeitpunkten t0 und t4 zunächst ausschließlich über die ersten Spritzlöcher 25 der Einspritzdüse 23 und beginnend mit Zeitpunkt t4 auch zusätzlich über die zweiten Spritzlöcher 26 der Einspritzdüse 23 erster Kraftstoff in den Brennraum 9 des jeweiligen Zylinders 2 des Dual-Fuel-Motors eingebracht wird. Beginnend mit dem Zeitpunkt t6 erfolgt am Ende eines jeweiligen Einspritztakts das Schließen der Einspritzdüse 23, wobei zwischen den Zeitpunkten t6 und t7 die zweiten Spritzlöcher 26 der Einspritzdüse 23und zwischen den Zeitpunkten t7 und t8 auch die ersten Spritzlöcher 25 der Einspritzdüse 23 verschlossen bzw. versperrt werden.

In der zweiten Betriebsart des Dual-Fuel-Motors kann das Zündfluid auch gemäß dem Kurvenverlauf 34 in den Brennraum 9 des jeweiligen Zylinders 2 eingebracht werden, wobei dann in der zweiten Betriebsart des Dual-Fuel-Motors sowohl über die ersten Spritzlöcher 25 der jeweiligen Einspritzdüse 23 als auch über die zweiten Spritzlöcher 26 der jeweiligen Einspritzdüse 23 Zündfluid in den Brennraum 9 des jeweiligen Zylinders 2 eingebracht wird, und zwar zwischen den Zeitpunkten t0 und t4 und zwischen den Zeitpunkten t7` und t8' ausschließlich über die ersten Spritzlöcher 25 und zwischen den Zeitpunkten t4 und t6` sowohl über die ersten Spritzlöcher 25 als auch über die zweiten Spritzlöcher 26.

Mit der erfindungsgemäßen Einspritzdüse 23 kann bei einfacher Bauform derselben in der ersten Betriebsart des Dual-Fuel-Motors eine große Menge ersten Kraftstoffs und in der zweiten Betriebsart des Dual-Fuel-Motorseine geringe Menge ersten Kraftstoffs, die dann als Zündfluid dient, in die Brennkammer 9 der Zylinder 2 des Dual-Fuel-Motors 1 eingebracht werden. Es ist kein separates Einspritzsystem für Zündfluid erforderlich. Die erfindungsgemäße Einspritzdüse 23 lässt sich einfach fertigen.

Die Erfindung betrifft weiterhin einen Dual-Fuel-Motor 1 mit vorzugsweise mehreren Zylindern 2, wobei jeder Zylinder 2 eine erfindungsgemäße Einspritzdüse 23 aufweist. Ferner betrifft die Erfindung ein Verfahren zum Betreiben eines Dual-Fuel-Motors 1, mit welchem in der zweiten Betriebsart des Dual-Fuel-Motors, in welcher die Einspritzdüse 23 dem Einbringen von Zündfluid in den Brennraum 9 des jeweiligen Zylinders 2 dient, das Einbringen von Zündfluid gemäß dem Kurvenverlauf 34 der Fig. 5 erfolgt, nach welchem in der zweiten Betriebsart das Zündfluid sowohl über die ersten Spritzlöcher 25 mit dem relativ kleinen Spritzlochquerschnitt und auch über die zweiten Spritzlöcher 26 mit dem relativ großen Spritzlochquerschnitt in den Brennraum 9 des jeweiligen Zylinders 2 eingebracht wird.

## Patentansprüche

1. Einspritzdüse (23) für einen Zylinder (2) eines Dual-Fuel-Motors (1), wobei über die Einspritzdüse (23) in einer ersten Betriebsart des Dual-Fuel-Motors (1) ein erster Kraftstoff und in einer zweiten Betriebsart des Dual-Fuel-Motors (1) Zündfluid für einen zweiten Kraftstoff in einen Brennraum (9) des Zylinders (2) einbringbar ist, wobei die Einspritzdüse (23) einen Einspritzdüsenkörper (24) mit ersten Spritzlöchern (25) und zweiten Spritzlöchern (26) sowie eine im Einspritzdüsenkörper (24) verlagerbar geführte Einspritzdüsennadel (27) aufweist, wobei die ersten Spritzlöcher (25) einen kleineren Spritzlochquerschnitt aufweisen als die zweiten Spritzlöcher (26), und wobei die ersten und zweiten Spritzlöcher (25, 26) in Axialrichtung und damit in Verlagerungsrichtung der Einspritzdüsennadel (27) gesehen einen definierten Abstand aufweisen, **dadurch gekennzeichnet, dass** in einer dem Schließen oder Versperren der Spritzlöcher (25, 26) dienenden Verlagerungsrichtung (X1) der Einspritzdüsennadel (27) gesehen die ersten Spritzlöchern (25) vor den zweiten Spritzlöchern (26) und in einer dem Öffnen oder Freigeben der Spritzlöcher (25, 26) dienenden Verlagerungsrichtung (X2) der Einspritzdüsennadel (27) gesehen die ersten Spritzlöcher (25) hinter den zweiten Spritzlöchern (26) liegen.

2. Einspritzdüse nach Anspruch 1, **dadurch gekennzeichnet, dass** die Einspritzdüsennadel (27) einen ersten Nadelabschnitt (27a), der mit einem ersten Ventilsitz (24a) des Einspritzdüsenkörpers (24) zusammenwirkt, und einen zweiten Nadelabschnitt (27b), der mit einem zweiten Ventilsitz (24b) des Einspritzdüsenkörpers (24) zusammenwirkt, aufweist, wobei dann, wenn die Einspritzdüsennadel (27) sowohl die ersten Spritzlöcher (25) als auch die zweiten Spritzlöcher (26) öffnet oder freigibt, der erste Nadelabschnitt (27a) vom ersten Ventilsitz (24a) und der zweite Nadelabschnitt (27b) vom zweiten Ventilsitz (24b) abgehoben ist.

3. Einspritzdüse nach Anspruch 2, **dadurch gekennzeichnet, dass** dann, wenn die Einspritzdüsennadel (27) ausschließlich die ersten Spritzlöcher (25) öffnet oder freigibt, der ersten Nadelabschnitt (27a) vom ersten Ventilsitz (24b) abgehoben ist, jedoch der zweite Nadelabschnitt (27b) am zweiten Ventilsitz (24b) anliegt.

4. Einspritzdüse nach einem der Ansprüche 1 bis 3, **dadurch gekennzeichnet, dass** die Einspritzdüsennadel (27) in der ersten Betriebsart des Dual-Fuel-Motors, in welcher die Einspritzdüse (23) dem Einbringen des ersten Kraftstoffs in den Brennraum (9) des Zylinders (2) dient, die ersten und zweiten Spritzlöcher (25, 26) zum Einbringen des ersten Kraftstoffs in den Brennraum (9) des Zylinders (2) öffnet oder freigibt.

5. Einspritzdüse nach einem der Ansprüche 1 bis 4, **dadurch gekennzeichnet, dass** die Einspritzdüsennadel (27) in der zweiten Betriebsart des Dual-Fuel-Motors, in welcher die Einspritzdüse (23) dem Einbringen des Zündfluids in den Brennraum (9) des Zylinders (2) dient, die ersten Spritzlöcher (25) zum Einbringen des Zündfluids in den Brennraum (9) des Zylinders (2) öffnet oder freigibt jedoch die zweiten Spritzlöcher (26) geschlossen oder versperrt hält.

6. Einspritzdüse nach einem der Ansprüche 1 bis 4, **dadurch gekennzeichnet, dass** die Einspritzdüsennadel (27) in der zweiten Betriebsart des Dual-Fuel-Motors, in welcher die Einspritzdüse (23) dem Einbringen des Zündfluids in den Brennraum (9) des Zylinders (2) dient, die ersten und die zweiten Spritzlöcher (25, 26) zum Einbringen des Zündfluids in den Brennraum (9) des Zylinders (2) öffnet oder freigibt.

7. Einspritzdüse nach einem der Ansprüche 2 bis 6, **dadurch gekennzeichnet, dass** der erste Nadelabschnitt (27a) der Einspritzdüsennadel (27) kegelstumpfartig und der zweite Nadelabschnitt (27b) derselben zylindrisch konturiert ist.

8. Einspritzdüse nach einem der Ansprüche 1 bis 7, **dadurch gekennzeichnet, dass** in der ersten Betriebsart des Dual-Fuel-Motors, in welcher die Einspritzdüse (23) dem Einbringen des ersten Kraftstoffs in den Brennraum (9) des Zylinders (2) dient, der erste Kraftstoff ausschließlich außen entlang die Einspritzdüsennadel (27) durch einen Spalt zwischen der Einspritzdüsennadel (27) und dem Einspritzdüsenkörper (24) strömt.

9. Einspritzdüse nach einem der Ansprüche 1 bis 8, **dadurch gekennzeichnet, dass** in der zweiten Betriebsart des Dual-Fuel-Motors, in welcher die Einspritzdüse (23) dem Einbringen des Zündfluids in den Brennraum (9) des Zylinders (2) dient, das Zündfluid ausschließlich außen entlang die Einspritzdüsennadel (27) durch einen Spalt zwischen der Einspritzdüsennadel (27) und dem Einspritzdüsenkörper (24) strömt.

10. Dual-Fuel-Motor, wobei in einer ersten Betriebsart des Dual-Fuel-Motors einem Brennraum (9) mindestens eines Zylinders (2) ein erster Kraftstoff zur Verbrennung desselben zuführbar ist, und wobei in einer zweiten Betriebsart des Dual-Fuel-Motors dem Brennraum (9) des mindestens einen Zylinders (2) einerseits ein zweiter Kraftstoff zur Verbrennung desselben und andererseits ein Zündfluid zur Zündung desselben zuführbar ist, **gekennzeichnet durch** eine Kraftstoffzuführeinrichtung, die für den jeweiligen Zylinder (2) eine Einspritzdüse (23) nach einem der Ansprüche 1 bis 9 aufweist, über die in der ersten Betriebsart der erste Kraftstoff und in der zweiten Betriebsart das Zündfluid in den Brennraum (9) des jeweiligen Zylinders (2) einbringbar ist.

11. Verfahren zum Betreiben eines Dual-Fuel-Motors nach Anspruch 10, wobei in der zweiten Betriebsart des Dual-Fuel-Motors über die ersten und die zweiten Spritzlöcher (25, 26) des jeweiligen Zylinders (2) Zündfluid in den Brennraum (9) des jeweiligen Zylinders (2) eingebracht wird.
